# EUROPEAN PATENT APPLICATION

(11) **EP 3 594 824 A1**
(43) Date of publication of application: **15.01.2020**
(21) Application number: 19185704.4
(22) Date of filing: 11.07.2019
(51) Int. Cl.: G06F 16/25

(54) **EXTERNAL DATA MANAGEMENT IN A REMOTE NETWORK MANAGEMENT PLATFORM**

(30) Priority: 11.07.2018 US 201816032981
(71) Applicant: ServiceNow, Inc., Santa Clara, CA 95054 (US)
(72) Inventor: BARRON-KRAUS, Kyle James, Santa Clara, CA 95054 (US); KRASNOW, Gregory Allen, Santa Clara, CA 95054 (US); BELL, Douglas Andrew, Santa Clara, CA 95054 (US)
(74) Representative: Boult Wade Tennant LLP

(57) **Abstract**

A computational instance of a remote network management platform includes a database API configured to allow operations to be performed on data within the computational instance. A computing system of the computational instance (i) receives a request from a client device to perform an operation on a server device external to the platform; (ii) determines that the server device is accessible by way of a communication protocol that supports a set of protocol-specific operations; (iii) translates the request from a format of the database API into a format of the communication protocol by mapping the requested operation to a target operation of the protocol-specific operations; (iv) instructs the server device to perform the target operation; (v) receives a response containing a result of the server device performing the target operation; and (vi) translates the result from the format of the communication protocol into the format of the database API.

## Description

### BACKGROUND

A remote network management platform may take the form of a hosted environment that provides an application Platform-as-a-Service (aPaaS) to users, particularly to operators of a managed network such as an enterprise. The services provided may take the form of web-based portals and/or software applications that enterprises, and both internal and external users thereof, may access through computational instances of the remote network management platform.

Furthermore, the remote network management platform may provide each enterprise with its own database in a dedicated computing instance, and the computing instance may use a database application programming interface (API) to perform operations on data stored in the enterprise's database. The enterprise may also have data stored on various server devices that are external to the remote network management platform.

### SUMMARY

The embodiments herein overcome the aforementioned limitations by allowing an enterprise to use a remote network management platform to manage data stored on server devices that are external to the remote network management platform. Traditionally, the data could be imported into a database of the remote network management platform, and the remote network management platform could use the database API to perform data operations on the imported data. However, importing data onto the remote network management platform may provide a number of difficulties. For instance, importing the data may involve integrating the imported data with pre-existing data that was previously stored on the remote network management platform. This integration can be tedious and time-consuming if the external data is organized or formatted differently than the pre-existing data, as the external data will have to be reorganized or reformatted to comply with the structure of the pre-existing data on the remote network management platform.

The systems and methods disclosed herein help address these or other issues by allowing the remote network management platform to manage the external data without importing the external data onto the remote network management platform. To achieve this, the remote network management platform may use the database API to simulate the presence of the external data on the remote network management platform, so that, to a user of the enterprise, it appears as though the external data is stored on the remote network management platform, along with the rest of the enterprise's data. The user may then use the database API to request performance of various data operations on the data in the same manner that the user would perform data operations on the data stored on the remote network management platform. The remote network management platform may then translate the requested operations from a format of the database API to a format supported by a communication protocol of the external server where the external data is stored, and send the translated request to the external server. Responsive to receiving the translated request, the external server may perform the requested operations on the external data.

Accordingly, a first example embodiment may involve a computational instance of a remote network management platform, the computational instance including: (i) a database application programming interface (API) configured to allow operations to be performed on data within one or more database devices of the computational instance, and (ii) an application configured to execute on a computing system of the computational instance. The application may receive, using the database API, a request from a client device, where the request is to perform a particular operation on a server device that is external to the remote network management platform. The application may further determine that the server device is accessible by way of a communication protocol that supports a set of protocol-specific operations, and the application may translate the request from a format of the database API into a format of the communication protocol, where the translation of the request involves mapping the particular operation of the request to a target operation of the set of protocol-specific operations. The application may transmit, using the communication protocol, a message to the server device, where the message instructs the server device to perform the target operation. The application may receive, using the communication protocol, a response from the server device, where the response contains a result of the server device attempting to perform or performing the target operation. The application may translate the result from the format of the communication protocol into the format of the database API, and the application may further transmit, using the database API, the result as translated to the client device.

In a second example embodiment, an article of manufacture may include a non-transitory computer-readable medium, having stored thereon program instructions that, upon execution by a computing system, cause the computing system to perform operations in accordance with the first example embodiment.

In a third example embodiment, a computing system may include at least one processor, as well as memory and program instructions. The program instructions may be stored in the memory, and upon execution by the at least one processor, cause the computing system to perform operations in accordance with the first example embodiment.

In a fourth example embodiment, a system may include various means for carrying out each of the operations of the first example embodiment.

These as well as other embodiments, aspects, advantages, and alternatives will become apparent to those of ordinary skill in the art by reading the following detailed description, with reference where appropriate to the accompanying drawings. Further, this summary and other descriptions and figures provided herein are intended to illustrate embodiments by way of example only and, as such, that numerous variations are possible. For instance, structural elements and process steps can be rearranged, combined, distributed, eliminated, or otherwise changed, while remaining within the scope of the embodiments as claimed.

### BRIEF DESCRIPTION OF THE DRAWINGS

Figure 1 illustrates a schematic drawing of a computing device, in accordance with example embodiments.
Figure 2 illustrates a schematic drawing of a server device cluster, in accordance with example embodiments.
Figure 3 depicts a remote network management architecture, in accordance with example embodiments.
Figure 4 depicts a communication environment involving a remote network management architecture, in accordance with example embodiments.
Figure 5A depicts another communication environment involving a remote network management architecture, in accordance with example embodiments.
Figure 5B is a flow chart, in accordance with example embodiments.
Figure 6A depicts a database table for use in connection with a remote network management platform, in accordance with example embodiments.
Figure 6B depicts another database table for use in connection with a remote network management platform, in accordance with example embodiments.
Figure 6C depicts a script for managing data in connection with a remote network management platform, in accordance with example embodiments.
Figure 7A depicts services exposed to a remote network management platform by an external server device, in accordance with example embodiments.
Figure 7B depicts a user interface for establishing communication between a remote network management platform and an external server device, in accordance with example embodiments.
Figure 7C depicts a user interface for creating a database table for use in connection with a remote network management platform, in accordance with example embodiments.
Figure 7D depicts a user interface for causing a remote network management platform to read data from an external server device, in accordance with example embodiments.
Figure 7E depicts a user interface for causing a remote network management platform to update data at an external server device, in accordance with example embodiments.
Figure 7F depicts a script for causing a remote network management platform to read data from an external server device, in accordance with example embodiments.
Figure 8 is a sequence diagram depicting communications between a remote network management platform and an external server device, in accordance with example embodiments.
Figure 9 is a flow chart, in accordance with example embodiments.

### DETAILED DESCRIPTION

Example methods, devices, and systems are described herein. It should be understood that the words "example" and "exemplary" are used herein to mean "serving as an example, instance, or illustration." Any embodiment or feature described herein as being an "example" or "exemplary" is not necessarily to be construed as preferred or advantageous over other embodiments or features unless stated as such. Thus, other embodiments can be utilized and other changes can be made without departing from the scope of the subject matter presented herein.

Accordingly, the example embodiments described herein are not meant to be limiting. It will be readily understood that the aspects of the present disclosure, as generally described herein, and illustrated in the figures, can be arranged, substituted, combined, separated, and designed in a wide variety of different configurations. For example, the separation of features into "client" and "server" components may occur in a number of ways.

Further, unless context suggests otherwise, the features illustrated in each of the figures may be used in combination with one another. Thus, the figures should be generally viewed as component aspects of one or more overall embodiments, with the understanding that not all illustrated features are necessary for each embodiment.

Additionally, any enumeration of elements, blocks, or steps in this specification or the claims is for purposes of clarity. Thus, such enumeration should not be interpreted to require or imply that these elements, blocks, or steps adhere to a particular arrangement or are carried out in a particular order.

### I. Introduction

A large enterprise is a complex entity with many interrelated operations. Some of these are found across the enterprise, such as human resources (HR), supply chain, information technology (IT), and finance. However, each enterprise also has its own unique operations that provide essential capabilities and/or create competitive advantages.

To support widely-implemented operations, enterprises typically use off-the-shelf software applications, such as customer relationship management (CRM) and human capital management (HCM) packages. However, they may also need custom software applications to meet their own unique requirements. A large enterprise often has dozens or hundreds of these custom software applications. Nonetheless, the advantages provided by the embodiments herein are not limited to large enterprises and may be applicable to an enterprise, or any other type of organization, of any size.

Many such software applications are developed by individual departments within the enterprise. These range from simple spreadsheets to custom-built software tools and databases. But the proliferation of siloed custom software applications has numerous disadvantages. It negatively impacts an enterprise's ability to run and grow its operations, innovate, and meet regulatory requirements. The enterprise may find it difficult to integrate, streamline and enhance its operations due to lack of a single system that unifies its subsystems and data.

To efficiently create custom applications, enterprises would benefit from a remotely-hosted application platform that eliminates unnecessary development complexity. The goal of such a platform would be to reduce time-consuming, repetitive application development tasks so that software engineers and individuals in other roles can focus on developing unique, high-value features.

In order to achieve this goal, the concept of Application Platform as a Service (aPaaS) is introduced, to intelligently automate workflows throughout the enterprise. An aPaaS system is hosted remotely from the enterprise, but may access data, applications, and services within the enterprise by way of secure connections. Such an aPaaS system may have a number of advantageous capabilities and characteristics. These advantages and characteristics may be able to improve the enterprise's operations and workflow for IT, HR, CRM, customer service, application development, and security.

The aPaaS system may support development and execution of model-view-controller (MVC) applications. MVC applications divide their functionality into three interconnected parts (model, view, and controller) in order to isolate representations of information from the manner in which the information is presented to the user, thereby allowing for efficient code reuse and parallel development. These applications may be web-based, and offer create, read, update, delete (CRUD) capabilities. This allows new applications to be built on a common application infrastructure.

The aPaaS system may support standardized application components, such as a standardized set of widgets for graphical user interface (GUI) development. In this way, applications built using the aPaaS system have a common look and feel. Other software components and modules may be standardized as well. In some cases, this look and feel can be branded or skinned with an enterprise's custom logos and/or color schemes.

The aPaaS system may support the ability to configure the behavior of applications using metadata. This allows application behaviors to be rapidly adapted to meet specific needs. Such an approach reduces development time and increases flexibility. Further, the aPaaS system may support GUI tools that facilitate metadata creation and management, thus reducing errors in the metadata.

The aPaaS system may support clearly-defined interfaces between applications, so that software developers can avoid unwanted inter-application dependencies. Thus, the aPaaS system may implement a service layer in which persistent state information and other data is stored.

The aPaaS system may support a rich set of integration features so that the applications thereon can interact with legacy applications and third-party applications. For instance, the aPaaS system may support a custom employee-onboarding system that integrates with legacy HR, IT, and accounting systems.

The aPaaS system may support enterprise-grade security. Furthermore, since the aPaaS system may be remotely hosted, it should also utilize security procedures when it interacts with systems in the enterprise or third-party networks and services hosted outside of the enterprise. For example, the aPaaS system may be configured to share data amongst the enterprise and other parties to detect and identify common security threats.

Other features, functionality, and advantages of an aPaaS system may exist. This description is for purpose of example and is not intended to be limiting.

As an example of the aPaaS development process, a software developer may be tasked to create a new application using the aPaaS system. First, the developer may define the data model, which specifies the types of data that the application uses and the relationships therebetween. Then, via a GUI of the aPaaS system, the developer enters (e.g., uploads) the data model. The aPaaS system automatically creates all of the corresponding database tables, fields, and relationships, which can then be accessed via an object-oriented services layer.

In addition, the aPaaS system can also build a fully-functional MVC application with client-side interfaces and server-side CRUD logic. This generated application may serve as the basis of further development for the user. Advantageously, the developer does not have to spend a large amount of time on basic application functionality. Further, since the application may be web-based, it can be accessed from any Internet-enabled client device. Alternatively or additionally, a local copy of the application may be able to be accessed, for instance, when Internet service is not available.

The aPaaS system may also support a rich set of pre-defined functionality that can be added to applications. These features include support for searching, email, templating, workflow design, reporting, analytics, social media, scripting, mobile-friendly output, and customized GUIs.

The following embodiments describe architectural and functional aspects of example aPaaS systems, as well as the features and advantages thereof.

### II. Example Computing Devices and Cloud-Based Computing Environments

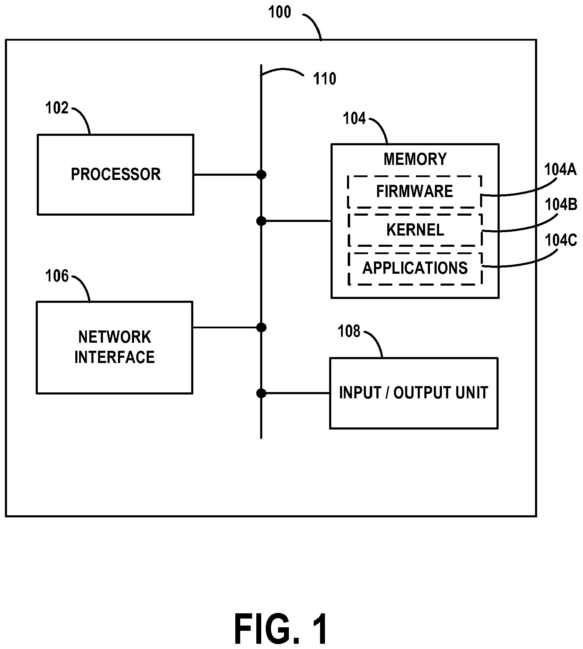

Figure 1 is a simplified block diagram exemplifying a computing device 100, illustrating some of the components that could be included in a computing device arranged to operate in accordance with the embodiments herein. Computing device 100 could be a client device (e.g., a device actively operated by a user), a server device (e.g., a device that provides computational services to client devices), or some other type of computational platform. Some server devices may operate as client devices from time to time in order to perform particular operations, and some client devices may incorporate server features.

In this example, computing device 100 includes processor 102, memory 104, network interface 106, and an input / output unit 108, all of which may be coupled by a system bus 110 or a similar mechanism. In some embodiments, computing device 100 may include other components and/or peripheral devices (e.g., detachable storage, printers, and so on).

Processor 102 may be one or more of any type of computer processing element, such as a central processing unit (CPU), a co-processor (e.g., a mathematics, graphics, or encryption co-processor), a digital signal processor (DSP), a network processor, and/or a form of integrated circuit or controller that performs processor operations. In some cases, processor 102 may be one or more single-core processors. In other cases, processor 102 may be one or more multi-core processors with multiple independent processing units. Processor 102 may also include register memory for temporarily storing instructions being executed and related data, as well as cache memory for temporarily storing recently-used instructions and data.

Memory 104 may be any form of computer-usable memory, including but not limited to random access memory (RAM), read-only memory (ROM), and non-volatile memory (e.g., flash memory, hard disk drives, solid state drives, compact discs (CDs), digital video discs (DVDs), and/or tape storage). Thus, memory 104 represents both main memory units, as well as long-term storage. Other types of memory may include biological memory.

Memory 104 may store program instructions and/or data on which program instructions may operate. By way of example, memory 104 may store these program instructions on a non-transitory, computer-readable medium, such that the instructions are executable by processor 102 to carry out any of the methods, processes, or operations disclosed in this specification or the accompanying drawings.

As shown in Figure 1, memory 104 may include firmware 104A, kernel 104B, and/or applications 104C. Firmware 104A may be program code used to boot or otherwise initiate some or all of computing device 100. Kernel 104B may be an operating system, including modules for memory management, scheduling and management of processes, input / output, and communication. Kernel 104B may also include device drivers that allow the operating system to communicate with the hardware modules (e.g., memory units, networking interfaces, ports, and busses), of computing device 100. Applications 104C may be one or more user-space software programs, such as web browsers or email clients, as well as any software libraries used by these programs. Memory 104 may also store data used by these and other programs and applications.

Network interface 106 may take the form of one or more wireline interfaces, such as Ethernet (e.g., Fast Ethernet, Gigabit Ethernet, and so on). Network interface 106 may also support communication over one or more non-Ethernet media, such as coaxial cables or power lines, or over wide-area media, such as Synchronous Optical Networking (SONET) or digital subscriber line (DSL) technologies. Network interface 106 may additionally take the form of one or more wireless interfaces, such as IEEE 802.11 (Wifi), BLUETOOTH®, global positioning system (GPS), or a wide-area wireless interface. However, other forms of physical layer interfaces and other types of standard or proprietary communication protocols may be used over network interface 106. Furthermore, network interface 106 may comprise multiple physical interfaces. For instance, some embodiments of computing device 100 may include Ethernet, BLUETOOTH®, and Wifi interfaces.

Input / output unit 108 may facilitate user and peripheral device interaction with example computing device 100. Input / output unit 108 may include one or more types of input devices, such as a keyboard, a mouse, a touch screen, and so on. Similarly, input / output unit 108 may include one or more types of output devices, such as a screen, monitor, printer, and/or one or more light emitting diodes (LEDs). Additionally or alternatively, computing device 100 may communicate with other devices using a universal serial bus (USB) or high-definition multimedia interface (HDMI) port interface, for example.

In some embodiments, one or more instances of computing device 100 may be deployed to support an aPaaS architecture. The exact physical location, connectivity, and configuration of these computing devices may be unknown and/or unimportant to client devices. Accordingly, the computing devices may be referred to as "cloud-based" devices that may be housed at various remote data center locations.

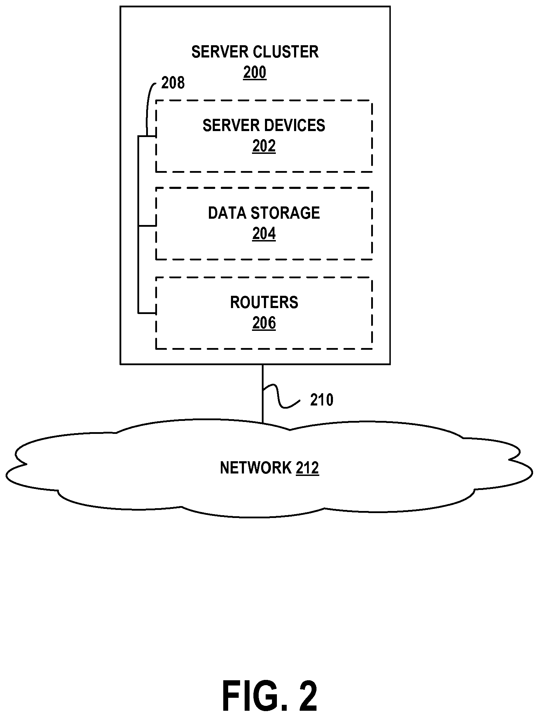

Figure 2 depicts a cloud-based server cluster 200 in accordance with example embodiments. In Figure 2, operations of a computing device (e.g., computing device 100) may be distributed between server devices 202, data storage 204, and routers 206, all of which may be connected by local cluster network 208. The number of server devices 202, data storages 204, and routers 206 in server cluster 200 may depend on the computing task(s) and/or applications assigned to server cluster 200.

For example, server devices 202 can be configured to perform various computing tasks of computing device 100. Thus, computing tasks can be distributed among one or more of server devices 202. To the extent that these computing tasks can be performed in parallel, such a distribution of tasks may reduce the total time to complete these tasks and return a result. For purpose of simplicity, both server cluster 200 and individual server devices 202 may be referred to as a "server device." This nomenclature should be understood to imply that one or more distinct server devices, data storage devices, and cluster routers may be involved in server device operations.

Data storage 204 may be data storage arrays that include drive array controllers configured to manage read and write access to groups of hard disk drives and/or solid state drives. The drive array controllers, alone or in conjunction with server devices 202, may also be configured to manage backup or redundant copies of the data stored in data storage 204 to protect against drive failures or other types of failures that prevent one or more of server devices 202 from accessing units of cluster data storage 204. Other types of memory aside from drives may be used.

Routers 206 may include networking equipment configured to provide internal and external communications for server cluster 200. For example, routers 206 may include one or more packet-switching and/or routing devices (including switches and/or gateways) configured to provide (i) network communications between server devices 202 and data storage 204 via cluster network 208, and/or (ii) network communications between the server cluster 200 and other devices via communication link 210 to network 212.

Additionally, the configuration of cluster routers 206 can be based at least in part on the data communication requirements of server devices 202 and data storage 204, the latency and throughput of the local cluster network 208, the latency, throughput, and cost of communication link 210, and/or other factors that may contribute to the cost, speed, fault-tolerance, resiliency, efficiency and/or other design goals of the system architecture.

As a possible example, data storage 204 may include any form of database, such as a structured query language (SQL) database. Various types of data structures may store the information in such a database, including but not limited to tables, arrays, lists, trees, and tuples. Furthermore, any databases in data storage 204 may be monolithic or distributed across multiple physical devices.

Server devices 202 may be configured to transmit data to and receive data from cluster data storage 204. This transmission and retrieval may take the form of SQL queries or other types of database queries, and the output of such queries, respectively. Additional text, images, video, and/or audio may be included as well. Furthermore, server devices 202 may organize the received data into web page representations. Such a representation may take the form of a markup language, such as the hypertext markup language (HTML), the extensible markup language (XML), or some other standardized or proprietary format. Moreover, server devices 202 may have the capability of executing various types of computerized scripting languages, such as but not limited to Perl, Python, PHP Hypertext Preprocessor (PHP), Active Server Pages (ASP), JavaScript, and so on. Computer program code written in these languages may facilitate the providing of web pages to client devices, as well as client device interaction with the web pages.

### III. Example Remote Network Management Architecture

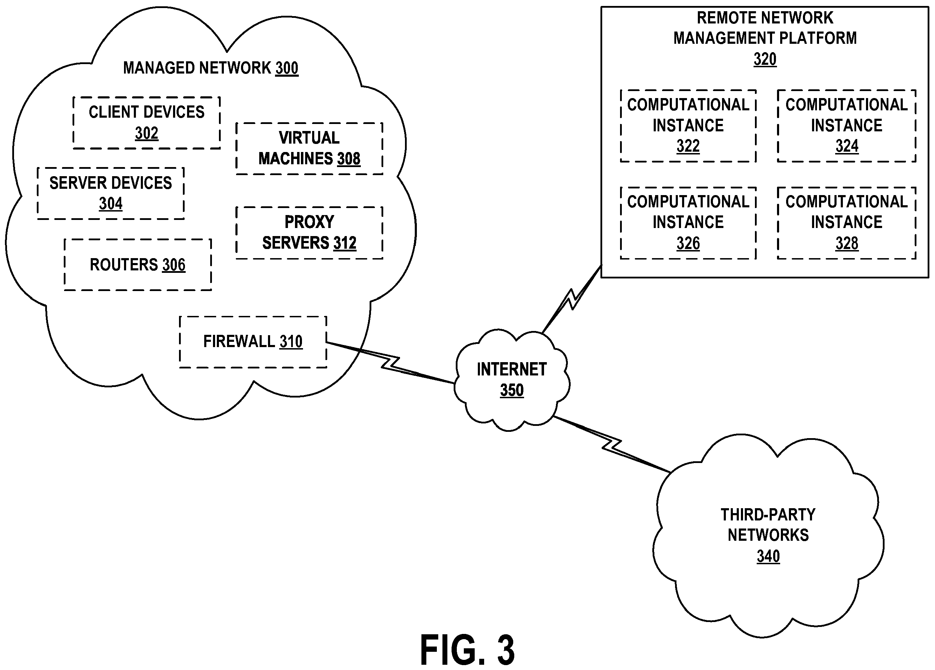

Figure 3 depicts a remote network management architecture, in accordance with example embodiments. This architecture includes three main components, managed network 300, remote network management platform 320, and third-party networks 340, all connected by way of Internet 350.

Managed network 300 may be, for example, an enterprise network used by an entity for computing and communications tasks, as well as storage of data. Thus, managed network 300 may include various client devices 302, server devices 304, routers 306, virtual machines 308, firewall 310, and/or proxy servers 312. Client devices 302 may be embodied by computing device 100, server devices 304 may be embodied by computing device 100 or server cluster 200, and routers 306 may be any type of router, switch, or gateway.

Virtual machines 308 may be embodied by one or more of computing device 100 or server cluster 200. In general, a virtual machine is an emulation of a computing system, and mimics the functionality (e.g., processor, memory, and communication resources) of a physical computer. One physical computing system, such as server cluster 200, may support up to thousands of individual virtual machines. In some embodiments, virtual machines 308 may be managed by a centralized server device or application that facilitates allocation of physical computing resources to individual virtual machines, as well as performance and error reporting. Enterprises often employ virtual machines in order to allocate computing resources in an efficient, as needed fashion. Providers of virtualized computing systems include VMWARE® and MICROSOFT®.

Firewall 310 may be one or more specialized routers or server devices that protect managed network 300 from unauthorized attempts to access the devices, applications, and services therein, while allowing authorized communication that is initiated from managed network 300. Firewall 310 may also provide intrusion detection, web filtering, virus scanning, application-layer gateways, and other applications or services. In some embodiments not shown in Figure 3, managed network 300 may include one or more virtual private network (VPN) gateways with which it communicates with remote network management platform 320 (see below).

Managed network 300 may also include one or more proxy servers 312. An embodiment of proxy servers 312 may be a server device that facilitates communication and movement of data between managed network 300, remote network management platform 320, and third-party networks 340. In particular, proxy servers 312 may be able to establish and maintain secure communication sessions with one or more computational instances of remote network management platform 320. By way of such a session, remote network management platform 320 may be able to discover and manage aspects of the architecture and configuration of managed network 300 and its components. Possibly with the assistance of proxy servers 312, remote network management platform 320 may also be able to discover and manage aspects of third-party networks 340 that are used by managed network 300.

Firewalls, such as firewall 310, typically deny all communication sessions that are incoming by way of Internet 350, unless such a session was ultimately initiated from behind the firewall (i.e., from a device on managed network 300) or the firewall has been explicitly configured to support the session. By placing proxy servers 312 behind firewall 310 (e.g., within managed network 300 and protected by firewall 310), proxy servers 312 may be able to initiate these communication sessions through firewall 310. Thus, firewall 310 might not have to be specifically configured to support incoming sessions from remote network management platform 320, thereby avoiding potential security risks to managed network 300.

In some cases, managed network 300 may consist of a few devices and a small number of networks. In other deployments, managed network 300 may span multiple physical locations and include hundreds of networks and hundreds of thousands of devices. Thus, the architecture depicted in Figure 3 is capable of scaling up or down by orders of magnitude.

Furthermore, depending on the size, architecture, and connectivity of managed network 300, a varying number of proxy servers 312 may be deployed therein. For example, each one of proxy servers 312 may be responsible for communicating with remote network management platform 320 regarding a portion of managed network 300. Alternatively or additionally, sets of two or more proxy servers may be assigned to such a portion of managed network 300 for purposes of load balancing, redundancy, and/or high availability.

Remote network management platform 320 is a hosted environment that provides aPaaS services to users, particularly to the operators of managed network 300. These services may take the form of web-based portals, for instance. Thus, a user can securely access remote network management platform 320 from, for instance, client devices 302, or potentially from a client device outside of managed network 300. By way of the web-based portals, users may design, test, and deploy applications, generate reports, view analytics, and perform other tasks.

As shown in Figure 3, remote network management platform 320 includes four computational instances 322, 324, 326, and 328. Each of these instances may represent a set of web portals, services, and applications (e.g., a wholly-functioning aPaaS system) available to a particular customer. In some cases, a single customer may use multiple computational instances. For example, managed network 300 may be an enterprise customer of remote network management platform 320, and may use computational instances 322, 324, and 326. The reason for providing multiple instances to one customer is that the customer may wish to independently develop, test, and deploy its applications and services. Thus, computational instance 322 may be dedicated to application development related to managed network 300, computational instance 324 may be dedicated to testing these applications, and computational instance 326 may be dedicated to the live operation of tested applications and services. A computational instance may also be referred to as a hosted instance, a remote instance, a customer instance, or by some other designation.

The multi-instance architecture of remote network management platform 320 is in contrast to conventional multi-tenant architectures, over which multi-instance architectures have several advantages. In multi-tenant architectures, data from different customers (e.g., enterprises) are comingled in a single database. While these customers' data are separate from one another, the separation is enforced by the software that operates the single database. As a consequence, a security breach in this system may impact all customers' data, creating additional risk, especially for entities subject to governmental, healthcare, and/or financial regulation. Furthermore, any database operations that impact one customer will likely impact all customers sharing that database. Thus, if there is an outage due to hardware or software errors, this outage affects all such customers. Likewise, if the database is to be upgraded to meet the needs of one customer, it will be unavailable to all customers during the upgrade process. Often, such maintenance windows will be long, due to the size of the shared database.

In contrast, the multi-instance architecture provides each customer with its own database in a dedicated computing instance. This prevents comingling of customer data, and allows each instance to be independently managed. For example, when one customer's instance experiences an outage due to errors or an upgrade, other computational instances are not impacted. Maintenance down time is limited because the database only contains one customer's data. Further, the simpler design of the multi-instance architecture allows redundant copies of each customer database and instance to be deployed in a geographically diverse fashion. This facilitates high availability, where the live version of the customer's instance can be moved when faults are detected or maintenance is being performed.

In order to support multiple computational instances in an efficient fashion, remote network management platform 320 may implement a plurality of these instances on a single hardware platform. For example, when the aPaaS system is implemented on a server cluster such as server cluster 200, it may operate a virtual machine that dedicates varying amounts of computational, storage, and communication resources to instances. But full virtualization of server cluster 200 might not be necessary, and other mechanisms may be used to separate instances. In some examples, each instance may have a dedicated account and one or more dedicated databases on server cluster 200. Alternatively, computational instance 322 may span multiple physical devices.

In some cases, a single server cluster of remote network management platform 320 may support multiple independent enterprises. Furthermore, as described below, remote network management platform 320 may include multiple server clusters deployed in geographically diverse data centers in order to facilitate load balancing, redundancy, and/or high availability.

Third-party networks 340 may be remote server devices (e.g., a plurality of server clusters such as server cluster 200) that can be used for outsourced computational, data storage, communication, and service hosting operations. These servers may be virtualized (i.e., the servers may be virtual machines). Examples of third-party networks 340 may include AMAZON WEB SERVICES® and MICROSOFT® Azure. Like remote network management platform 320, multiple server clusters supporting third-party networks 340 may be deployed at geographically diverse locations for purposes of load balancing, redundancy, and/or high availability.

Managed network 300 may use one or more of third-party networks 340 to deploy applications and services to its clients and customers. For instance, if managed network 300 provides online music streaming services, third-party networks 340 may store the music files and provide web interface and streaming capabilities. In this way, the enterprise of managed network 300 does not have to build and maintain its own servers for these operations.

Remote network management platform 320 may include modules that integrate with third-party networks 340 to expose virtual machines and managed services therein to managed network 300. The modules may allow users to request virtual resources and provide flexible reporting for third-party networks 340. In order to establish this functionality, a user from managed network 300 might first establish an account with third-party networks 340, and request a set of associated resources. Then, the user may enter the account information into the appropriate modules of remote network management platform 320. These modules may then automatically discover the manageable resources in the account, and also provide reports related to usage, performance, and billing.

Internet 350 may represent a portion of the global Internet. However, Internet 350 may alternatively represent a different type of network, such as a private wide-area or local-area packet-switched network.

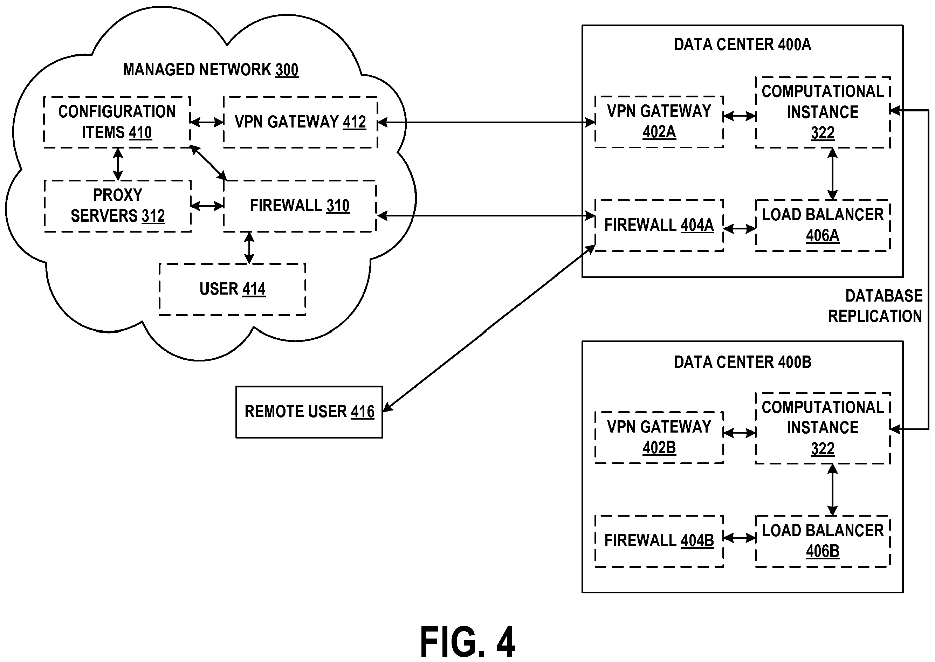

Figure 4 further illustrates the communication environment between managed network 300 and computational instance 322, and introduces additional features and alternative embodiments. In Figure 4, computational instance 322 is replicated across data centers 400A and 400B. These data centers may be geographically distant from one another, perhaps in different cities or different countries. Each data center includes support equipment that facilitates communication with managed network 300, as well as remote users.

In data center 400A, network traffic to and from external devices flows either through VPN gateway 402A or firewall 404A. VPN gateway 402A may be peered with VPN gateway 412 of managed network 300 by way of a security protocol such as Internet Protocol Security (IPSEC) or Transport Layer Security (TLS). Firewall 404A may be configured to allow access from authorized users, such as user 414 and remote user 416, and to deny access to unauthorized users. By way of firewall 404A, these users may access computational instance 322, and possibly other computational instances. Load balancer 406A may be used to distribute traffic amongst one or more physical or virtual server devices that host computational instance 322. Load balancer 406A may simplify user access by hiding the internal configuration of data center 400A, (e.g., computational instance 322) from client devices. For instance, if computational instance 322 includes multiple physical or virtual computing devices that share access to multiple databases, load balancer 406A may distribute network traffic and processing tasks across these computing devices and databases so that no one computing device or database is significantly busier than the others. In some embodiments, computational instance 322 may include VPN gateway 402A, firewall 404A, and load balancer 406A.

Data center 400B may include its own versions of the components in data center 400A. Thus, VPN gateway 402B, firewall 404B, and load balancer 406B may perform the same or similar operations as VPN gateway 402A, firewall 404A, and load balancer 406A, respectively. Further, by way of real-time or near-real-time database replication and/or other operations, computational instance 322 may exist simultaneously in data centers 400A and 400B.

Data centers 400A and 400B as shown in Figure 4 may facilitate redundancy and high availability. In the configuration of Figure 4, data center 400A is active and data center 400B is passive. Thus, data center 400A is serving all traffic to and from managed network 300, while the version of computational instance 322 in data center 400B is being updated in near-real-time. Other configurations, such as one in which both data centers are active, may be supported.

Should data center 400A fail in some fashion or otherwise become unavailable to users, data center 400B can take over as the active data center. For example, domain name system (DNS) servers that associate a domain name of computational instance 322 with one or more Internet Protocol (IP) addresses of data center 400A may re-associate the domain name with one or more IP addresses of data center 400B. After this re-association completes (which may take less than one second or several seconds), users may access computational instance 322 by way of data center 400B.

Figure 4 also illustrates a possible configuration of managed network 300. As noted above, proxy servers 312 and user 414 may access computational instance 322 through firewall 310. Proxy servers 312 may also access configuration items 410. In Figure 4, configuration items 410 may refer to any or all of client devices 302, server devices 304, routers 306, and virtual machines 308, any applications or services executing thereon, as well as relationships between devices, applications, and services. Thus, the term "configuration items" may be shorthand for any physical or virtual device, or any application or service remotely discoverable or managed by computational instance 322, or relationships between discovered devices, applications, and services. Configuration items may be represented in a configuration management database (CMDB) of computational instance 322.

As noted above, VPN gateway 412 may provide a dedicated VPN to VPN gateway 402A. Such a VPN may be helpful when there is a significant amount of traffic between managed network 300 and computational instance 322, or security policies otherwise suggest or require use of a VPN between these sites. In some embodiments, any device in managed network 300 and/or computational instance 322 that directly communicates via the VPN is assigned a public IP address. Other devices in managed network 300 and/or computational instance 322 may be assigned private IP addresses (e.g., IP addresses selected from the 10.0.0.0 - 10.255.255.255 or 192.168.0.0 - 192.168.255.255 ranges, represented in shorthand as subnets 10.0.0.0/8 and 192.168.0.0/16, respectively).

### IV. Example Device, Application, and Service Discovery

In order for remote network management platform 320 to administer the devices, applications, and services of managed network 300, remote network management platform 320 may first determine what devices are present in managed network 300, the configurations and operational statuses of these devices, and the applications and services provided by the devices, and well as the relationships between discovered devices, applications, and services. As noted above, each device, application, service, and relationship may be referred to as a configuration item. The process of defining configuration items within managed network 300 is referred to as discovery, and may be facilitated at least in part by proxy servers 312.

For purpose of the embodiments herein, an "application" may refer to one or more processes, threads, programs, client modules, server modules, or any other software that executes on a device or group of devices. A "service" may refer to a high-level capability provided by multiple applications executing on one or more devices working in conjunction with one another. For example, a high-level web service may involve multiple web application server threads executing on one device and accessing information from a database application that executes on another device.

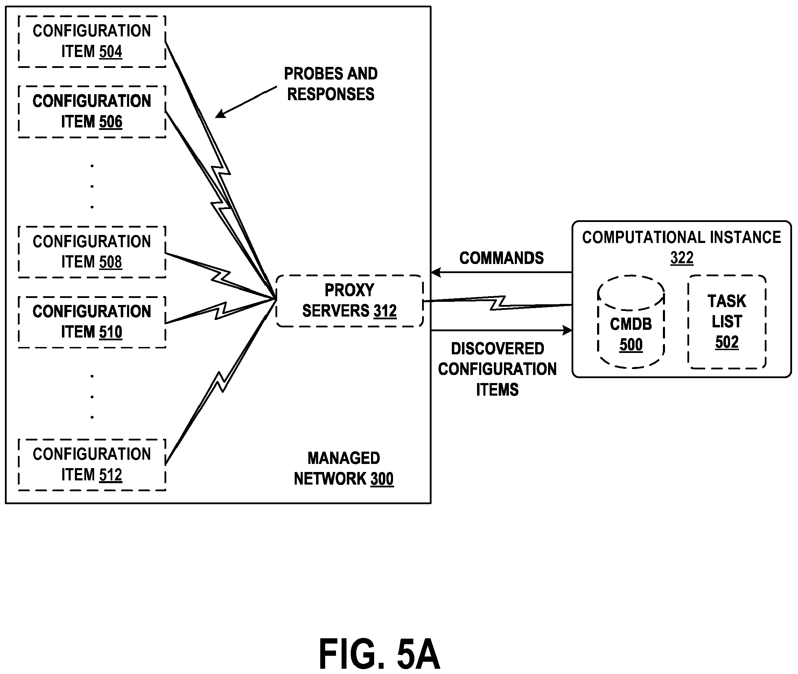

Figure 5A provides a logical depiction of how configuration items can be discovered, as well as how information related to discovered configuration items can be stored. For sake of simplicity, remote network management platform 320, third-party networks 340, and Internet 350 are not shown.

In Figure 5A, CMDB 500 and task list 502 are stored within computational instance 322. Computational instance 322 may transmit discovery commands to proxy servers 312. In response, proxy servers 312 may transmit probes to various devices, applications, and services in managed network 300. These devices, applications, and services may transmit responses to proxy servers 312, and proxy servers 312 may then provide information regarding discovered configuration items to CMDB 500 for storage therein. Configuration items stored in CMDB 500 represent the environment of managed network 300.

Task list 502 represents a list of activities that proxy servers 312 are to perform on behalf of computational instance 322. As discovery takes place, task list 502 is populated. Proxy servers 312 repeatedly query task list 502, obtain the next task therein, and perform this task until task list 502 is empty or another stopping condition has been reached.

To facilitate discovery, proxy servers 312 may be configured with information regarding one or more subnets in managed network 300 that are reachable by way of proxy servers 312. For instance, proxy servers 312 may be given the IP address range 192.168.0/24 as a subnet. Then, computational instance 322 may store this information in CMDB 500 and place tasks in task list 502 for discovery of devices at each of these addresses.

Figure 5A also depicts devices, applications, and services in managed network 300 as configuration items 504, 506, 508, 510, and 512. As noted above, these configuration items represent a set of physical and/or virtual devices (e.g., client devices, server devices, routers, or virtual machines), applications executing thereon (e.g., web servers, email servers, databases, or storage arrays), relationships therebetween, as well as services that involve multiple individual configuration items.

Placing the tasks in task list 502 may trigger or otherwise cause proxy servers 312 to begin discovery. Alternatively or additionally, discovery may be manually triggered or automatically triggered based on triggering events (e.g., discovery may automatically begin once per day at a particular time).

In general, discovery may proceed in four logical phases: scanning, classification, identification, and exploration. Each phase of discovery involves various types of probe messages being transmitted by proxy servers 312 to one or more devices in managed network 300. The responses to these probes may be received and processed by proxy servers 312, and representations thereof may be transmitted to CMDB 500. Thus, each phase can result in more configuration items being discovered and stored in CMDB 500.

In the scanning phase, proxy servers 312 may probe each IP address in the specified range of IP addresses for open Transmission Control Protocol (TCP) and/or User Datagram Protocol (UDP) ports to determine the general type of device. The presence of such open ports at an IP address may indicate that a particular application is operating on the device that is assigned the IP address, which in turn may identify the operating system used by the device. For example, if TCP port 135 is open, then the device is likely executing a WINDOWS® operating system. Similarly, if TCP port 22 is open, then the device is likely executing a UNIX® operating system, such as LINUX®. If UDP port 161 is open, then the device may be able to be further identified through the Simple Network Management Protocol (SNMP). Other possibilities exist. Once the presence of a device at a particular IP address and its open ports have been discovered, these configuration items are saved in CMDB 500.

In the classification phase, proxy servers 312 may further probe each discovered device to determine the version of its operating system. The probes used for a particular device are based on information gathered about the devices during the scanning phase. For example, if a device is found with TCP port 22 open, a set of UNIX®-specific probes may be used. Likewise, if a device is found with TCP port 135 open, a set of WINDOWS®-specific probes may be used. For either case, an appropriate set of tasks may be placed in task list 502 for proxy servers 312 to carry out. These tasks may result in proxy servers 312 logging on, or otherwise accessing information from the particular device. For instance, if TCP port 22 is open, proxy servers 312 may be instructed to initiate a Secure Shell (SSH) connection to the particular device and obtain information about the operating system thereon from particular locations in the file system. Based on this information, the operating system may be determined. As an example, a UNIX® device with TCP port 22 open may be classified as AIX®, HPUX, LINUX®, MACOS®, or SOLARIS®. This classification information may be stored as one or more configuration items in CMDB 500.

In the identification phase, proxy servers 312 may determine specific details about a classified device. The probes used during this phase may be based on information gathered about the particular devices during the classification phase. For example, if a device was classified as LINUX®, a set of LINUX®-specific probes may be used. Likewise if a device was classified as WINDOWS® 2012, as a set of WINDOWS®-2012-specific probes may be used. As was the case for the classification phase, an appropriate set of tasks may be placed in task list 502 for proxy servers 312 to carry out. These tasks may result in proxy servers 312 reading information from the particular device, such as basic input / output system (BIOS) information, serial numbers, network interface information, media access control address(es) assigned to these network interface(s), IP address(es) used by the particular device and so on. This identification information may be stored as one or more configuration items in CMDB 500.

In the exploration phase, proxy servers 312 may determine further details about the operational state of a classified device. The probes used during this phase may be based on information gathered about the particular devices during the classification phase and/or the identification phase. Again, an appropriate set of tasks may be placed in task list 502 for proxy servers 312 to carry out. These tasks may result in proxy servers 312 reading additional information from the particular device, such as processor information, memory information, lists of running processes (applications), and so on. Once more, the discovered information may be stored as one or more configuration items in CMDB 500.

Running discovery on a network device, such as a router, may utilize SNMP. Instead of or in addition to determining a list of running processes or other application-related information, discovery may determine additional subnets known to the router and the operational state of the router's network interfaces (e.g., active, inactive, queue length, number of packets dropped, etc.). The IP addresses of the additional subnets may be candidates for further discovery procedures. Thus, discovery may progress iteratively or recursively.

Once discovery completes, a snapshot representation of each discovered device, application, and service is available in CMDB 500. For example, after discovery, operating system version, hardware configuration and network configuration details for client devices, server devices, and routers in managed network 300, as well as applications executing thereon, may be stored. This collected information may be presented to a user in various ways to allow the user to view the hardware composition and operational status of devices, as well as the characteristics of services that span multiple devices and applications.

Furthermore, CMDB 500 may include entries regarding dependencies and relationships between configuration items. More specifically, an application that is executing on a particular server device, as well as the services that rely on this application, may be represented as such in CMDB 500. For instance, suppose that a database application is executing on a server device, and that this database application is used by a new employee onboarding service as well as a payroll service. Thus, if the server device is taken out of operation for maintenance, it is clear that the employee onboarding service and payroll service will be impacted. Likewise, the dependencies and relationships between configuration items may be able to represent the services impacted when a particular router fails.

In general, dependencies and relationships between configuration items may be displayed on a web-based interface and represented in a hierarchical fashion. Thus, adding, changing, or removing such dependencies and relationships may be accomplished by way of this interface.

Furthermore, users from managed network 300 may develop workflows that allow certain coordinated activities to take place across multiple discovered devices. For instance, an IT workflow might allow the user to change the common administrator password to all discovered LINUX® devices in single operation.

In order for discovery to take place in the manner described above, proxy servers 312, CMDB 500, and/or one or more credential stores may be configured with credentials for one or more of the devices to be discovered. Credentials may include any type of information needed in order to access the devices. These may include userid / password pairs, certificates, and so on. In some embodiments, these credentials may be stored in encrypted fields of CMDB 500. Proxy servers 312 may contain the decryption key for the credentials so that proxy servers 312 can use these credentials to log on to or otherwise access devices being discovered.

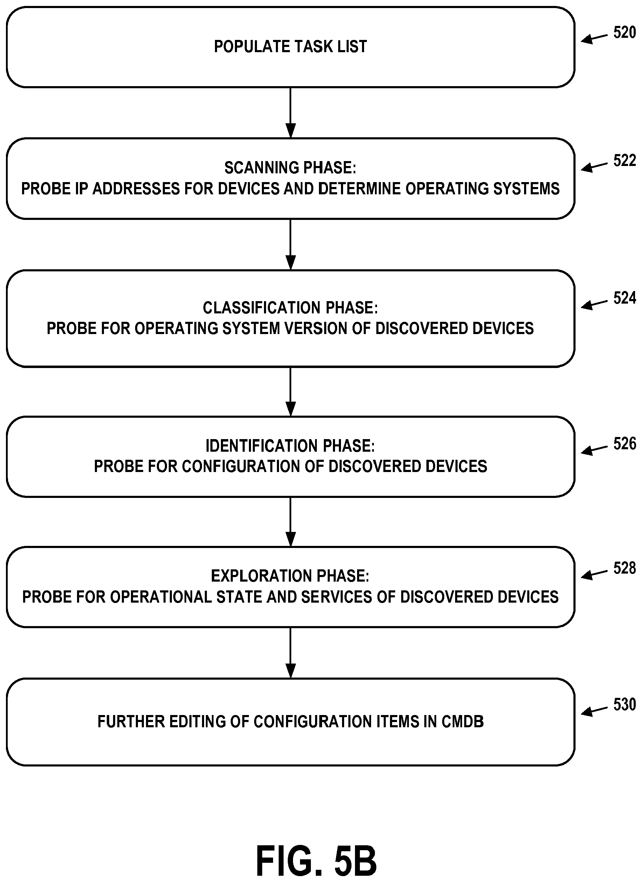

The discovery process is depicted as a flow chart in Figure 5B. At block 520, the task list in the computational instance is populated, for instance, with a range of IP addresses. At block 522, the scanning phase takes place. Thus, the proxy servers probe the IP addresses for devices using these IP addresses, and attempt to determine the operating systems that are executing on these devices. At block 524, the classification phase takes place. The proxy servers attempt to determine the operating system version of the discovered devices. At block 526, the identification phase takes place. The proxy servers attempt to determine the hardware and/or software configuration of the discovered devices. At block 528, the exploration phase takes place. The proxy servers attempt to determine the operational state and applications executing on the discovered devices. At block 530, further editing of the configuration items representing the discovered devices and applications may take place. This editing may be automated and/or manual in nature.

The blocks represented in Figure 5B are for purpose of example. Discovery may be a highly configurable procedure that can have more or fewer phases, and the operations of each phase may vary. In some cases, one or more phases may be customized, or may otherwise deviate from the exemplary descriptions above.

### V. Example Management of Externally Stored Data

As described above, a remote network management platform may provide aPaaS services to an enterprise, and those services may include managing the enterprise's data using database tables, fields, and relationships and providing access to the data via an object-oriented services layer. In particular, a computational instance of the remote network management platform may include a database API configured to allow operations to be performed on data within one or more database devices of the computational instance. In the examples described below, the database organizes data in tabular form (i.e., using database tables), but the present disclosure is not limited to tabular data structures and could be applied in connection with a database that organizes data in various other forms.

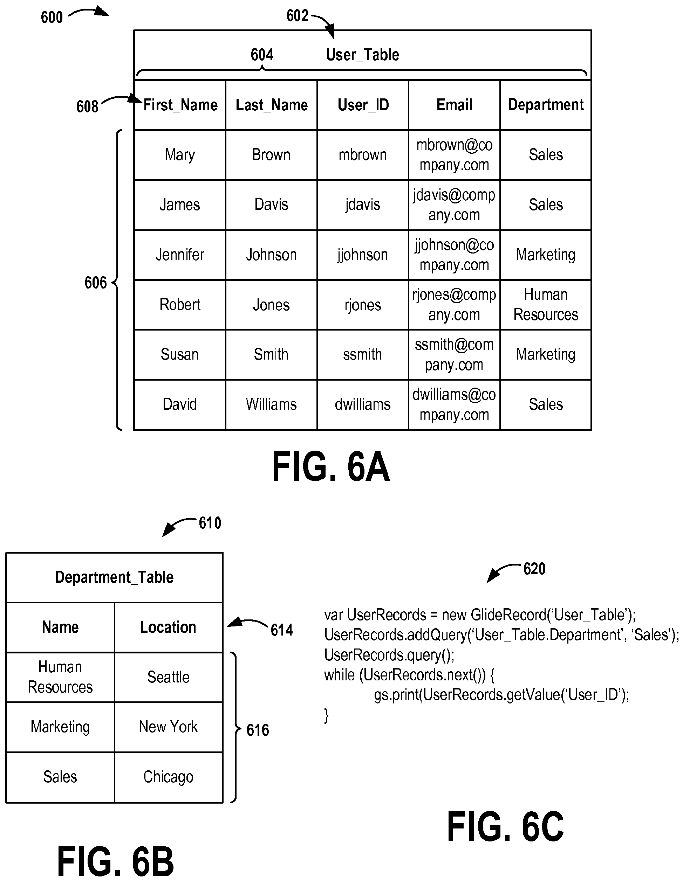

Figure 6A depicts a database table 600 of the remote network management platform, according to an example embodiment. The database table 600 has a title 602, a number of columns or fields 604, and a number of rows or records 606. Each record 606 includes data associated with one or more of the fields 604, and each field 604 has a label 608 describing the data associated with the field 604. As shown, the database table 600 (hereinafter referred to as user table 600) includes information of various users (e.g., employees) of an enterprise. In particular, the user table 600 includes the users' first names, last names, user IDs, email addresses, and work departments. In other examples, the user table 600 may include additional and/or alternative information.

By organizing data in tabular form, the database may define relationships between various database tables. For instance, a field in a first table may be a reference field that refers to a field in a second table, such that data associated with the field in the first table is defined by referencing the data associated with the field in the second table. This concept is described in further detail below in connection with Figure 6B.

Figure 6B depicts another database table 610 (referred to hereinafter as department table 610) that includes information about various departments of the enterprise. For instance, the enterprise may include a human resources department located in Seattle, a marketing department located in New York, and a sales department located in Chicago, and the department table 610 may include records 616 in which the name and location of each department are associated with fields 614 of the department table 610 labeled "Name" and "Location." With the name and location of each department stored in the department table 610, the user table 600 may reference the department table 610 in order to obtain the location data values for each of the records 606. For instance, with respect to the record 606 that includes information about Mary Brown, because the record 606 specifies that Mary Brown works in the sales department and because the department table 610 specifies that the sales department is located in Chicago, the user table 600 may reference the Location field 614 of the department table 610 to determine that the Mary Brown record 606 is associated with the "Chicago" data value for the Location field 614.

Further, as a result of the database organizing data in relational database tables as shown in Figures 6A and 6B, a user of the enterprise may use a database API to perform various operations, such as CRUD operations, on data distributed across multiple tables, which may provide for efficient manipulation of large amounts of data.

Figure 6C depicts code 620 that is scripted in accordance with the database API, according to an example embodiment. In particular, the code 620 defines a variable as a GlideRecord object. A GlideRecord references both the records and fields of a table. As shown, the GlideRecord of code 620 references the records and fields of the user table 600. Various operations can then be performed on the GlideRecord, including CRUD operations. In Figure 6C, a read operation is carried out by querying the GlideRecord for any records that include the value "Sales" associated with the field "Department," and then printing the user ID associated with each of the identified records. In this manner, executing the code 620 causes the database API to return the user IDs of any user of the enterprise that works in the sales department of the enterprise.

Because the code 620 of Figure 6C is specifically scripted to work with the database API of the remote network management platform, the code 620 might not be inherently usable to perform operations on data stored externally from the remote network management platform. This could be problematic, as an enterprise may receive services from a number of different providers, such that the enterprise has at least some data stored at various server devices outside the remote network management platform.

An example scenario in which the enterprise may have data stored both on and off the remote network management platform might arise when the enterprise uses two different human resource (HR) management systems, one of which is provided through the remote network management platform, and the other is not. For example, as part of its standard practice, the enterprise may exclusively use the remote network management platform for HR management, but then the enterprise may acquire another company that uses an HR management system that is external to the remote network management platform. As a result of the enterprise acquiring the company that uses the external HR system, the enterprise may have HR data (e.g., information about its employees similar to the information depicted in Figure 6A) stored on the remote network management platform for some employees and stored off the remote network management platform for other employees.

In order for the enterprise to more effectively manage its HR data for all of its employees, it may be desirable for the HR data to be accessible through a single mechanism, such as through the remote network management platform. However, as noted above, the database API of the remote network management platform may operate differently from the communication protocol used to access the external HR system. Thus, one solution may be to import the HR data from the external HR system into the remote network management platform. However, as described above, this process may be tedious and time-consuming, as it may involve substantially reorganizing the external HR data in order to integrate the external HR data with data already stored on the remote network management platform. Accordingly, a more desirable solution may involve using the remote network management platform to manage the external HR data for some period of time without importing the data onto the remote network management platform. The systems and methods disclosed herein may be used to provide such a solution.

As described above, the database API may be configured for organizing the enterprise's data in a tabular format, and users of the enterprise may manipulate the data by altering the tables (e.g., by creating, reading, updating, or deleting a table or a record of a table), for instance, by causing the database API to run a script using the database API. As described in connection with the examples disclosed herein, the database API may also be configured to provide similar functionality for manipulating data stored on an external server outside the remote network management platform. In order to do so, various data operations supported by the external server may be identified and mapped to one or more operations of the database API.

In practice, the remote network management system may simulate a database table associated with the external server, referred to hereinafter as an "external table." A user of the enterprise may use the database API to interact with the external table in the same manner as the user would interact with any other database table using the database API. However, the external table is not actually a database table of the remote network management system, but is instead a set of rules for making externally stored data appear to the user as if the data was stored in a database table of the remote network management system. As a result, when a user attempts to manipulate the external table by requesting a database API operation on the external table, instead of performing the requested operation on a database table, the remote network management system may cause the external server to execute one or more external server operations that are mapped to the requested database API operation.

The following example figures and accompanying description illustrate the above-described external table concept by describing a scenario in which an enterprise has its HR data stored partially on the remote network management platform and partially off the remote network management platform in connection with an external HR system. However, it will be understood that the present disclosure is not limited to such a scenario and instead can be applied to various other scenarios in which the enterprise uses the remote network management platform to manage data stored both on and off the remote network management platform.

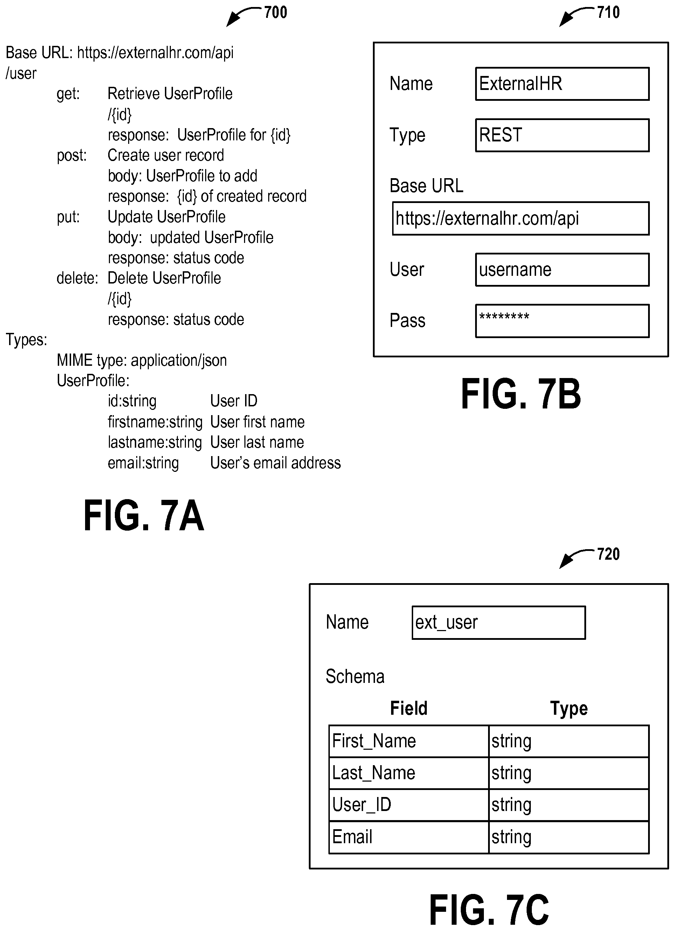

Figure 7A depicts example services 700 exposed by the external HR system to the remote network management platform. In the present example, the external HR system supports Representational State Transfer (REST) services, via the external HR system's base URL, https://externalhr.com/api, but in other examples, the external HR system could support various other web services. REST provides a web-based HTTP interface to specific data elements, such as specific data elements stored at the external HR system. As shown in Figure 7A, by adding "/user" to the base URL path of the external HR system, the REST services may be used to perform operations on specific user data elements stored at the external HR system. In particular, the external HR system supports GET, POST, PUT, and DELETE requests for operating on data elements.

In order to retrieve user profile data for a particular user profile, a GET request may be sent to the external HR system at an address corresponding to the base URL, but with "/user/{id}" appended to the base URL path, where {id} represents the user ID associated with the particular user profile. The external HR system may respond to the GET request with the user profile data for the specified user ID. In order to create a user profile, a POST request may be sent to the external HR system at the base URL, and the body of the POST request may contain the user profile data (e.g., user name, email address, etc.) for the created user profile. The external HR system may respond to the POST request with a user ID for the created user profile. In order to update user profile data for a particular user profile, a PUT request may be sent to the external HR system, and the body of the PUT request may include the updated user profile data. The external HR system may respond to the PUT request with a status code indicating, for instance, whether the user profile update was successful. In order to delete a particular user profile, a DELETE request may be sent to the external HR system at an address corresponding to the base URL, but with "/user/{id}" appended to the base URL path in order to identify the profile to be deleted. The external HR system may respond to the DELETE request with a status code indicating, for instance, whether the user profile was successfully deleted.

Given that the external HR system supports the above REST services, the remote network management platform may use those services to interact with the data stored on the external HR system without first importing the data onto the remote network management platform. To facilitate this, the remote network management platform may establish a connection for communicating with the external HR system.

Figure 7B depicts an example user interface 710 for establishing communication between the remote network management platform and the external HR system. The remote network management platform may provide the user interface 710 to a user of the enterprise, the user may input information into the user interface 710, and the remote network management platform may use the input information to establish a connection with the external HR system. For instance, as shown, the user interface 710 allows a user of the enterprise to specify a name of the external system, a protocol type supported by the external system, an address (e.g., URL) of the external system, and authentication credentials, such as a username and password. The remote network management platform may store this information for use when communicating with the external system.

Once the remote network management platform has established a connection with the external HR system, as described above for instance, the database API may be configured to create an external table, which is a simulation of a remote network management platform database table, associated with the external HR system, so that the data stored at the external HR system appears to a user, for all intents and purposes, as part of a database table of the remote network management platform. But in actuality, the data remains stored at the external HR system rather than getting imported into a database table of the remote network management platform. In this manner, instead of being an actual database table of the remote network management platform, the external table represents a set of rules that allow the user to interact with the external HR system using the database API.

Figure 7C depicts a user interface 720 for creating an external table for use in connection with a remote network management platform, in accordance with example embodiments. The remote network management platform may provide the user interface 720 to a user of the enterprise, and the user may input information into the user interface 720. The remote network management platform may use the input information to generate an external table associated with the external HR system. For instance, as shown, the user interface 720 allows a user of the enterprise to specify a name of the table and a schema of the table.

The name of the external table may be used when performing various operations on data in the external table. For instance, as described above in connection with Figure 6C, the database API is configured to receive queries on the external table or on related tables by referencing the external table name. As shown, the external table is named "ext_user," because the external HR system includes user profile information for various users of the enterprise, but other names could be used as well. The table schema may specify fields of the external table (e.g., what data the table is to be populated with), as well as the type of data associated with each field. For instance, as shown in Figure 7A, the external HR system stores data corresponding to a user's first name, last name, user ID, and email address, so the user interface 720 specifies that the external table includes corresponding fields for that data. Further, the user interface 720 specifies that each of these fields are configured to include string-type data. However, in other examples, the external HR system could include various other data having various other data types, such as employee identification numbers, addresses, or dates of birth.

Once the database API configures the external table according to the specified name and schema, a user of the enterprise may use the external table to perform operations on data stored on the external HR server. To do so, various methods may be defined for one or more data operations supported by the external HR server. For instance, as described above in connection with Figure 7A, the external HR server supports GET, POST, PUT, and DELETE requests for retrieving a user profile, creating a user profile, updating a user profile, and deleting a user profile, respectively. Accordingly, methods may be defined for causing the remote network management platform to send various requests to the external HR server to perform some or all of these requests.

In order to define such methods, the remote network management platform may provide a user interface to a user of the enterprise, the user may input information into the user interface, and the remote network management platform may use the input information to define the method. In some examples, such a user interface may allow a user to specify a name of the method, an external table associated with the method, an external server where the method is to be performed, a type of service request employed by the method, a URL where the service request is to be directed, and/or any input parameters to be used when carrying out the method.

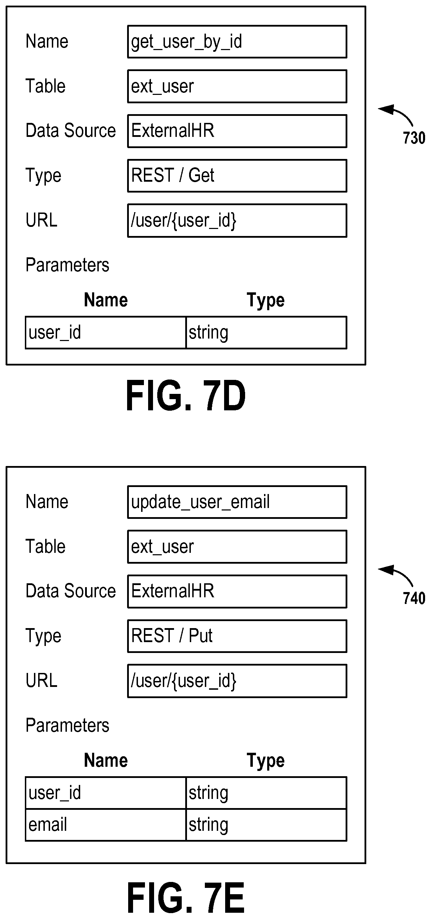

Figure 7D depicts a user interface 730 for defining a method for causing the remote network management platform to read data from the external HR server, in accordance with example embodiments. In particular, the method defined via user interface 730 is a method for retrieving, from the external HR server, a user profile that corresponds to a particular user ID. As shown, the method defined via user interface 730 is named "get_user_by_id" and is configured to be carried out with respect to the external table "ext_user" described above with respect to Figure 7C. The data source associated with the method is "ExternalHR," which is the external HR server identified via user interface 710, as shown in Figure 7B. As described above, the external HR server supports REST services, and retrieving a user profile from the external HR server involves a GET request, so user interface 730 specifies that the method has a service request type of "REST / Get." Further, user interface 730 specifies that the method involves sending the GET request to the base URL of the external HR server, but with "/user/{user_id}" added to the URL path. Here, the brackets indicate that "user_id" is a variable and should be replaced with an input parameter. As further shown, user interface 730 defines a single string-type input parameter "user_id" for the method.

Accordingly, the method defined by user interface 730 may involve the remote network management platform obtaining the "user_id" input parameter and sending a GET request to the external HR server at the user profile URL corresponding to the input parameter. The external HR server may respond to the GET request by providing the user profile data associated with the identified user profile URL. As described above in connection with Figure 7A, this may include a first name, last name, and email address.

Figure 7E depicts a user interface 740 for defining a method for causing the remote network management platform to update data at the external HR server, in accordance with example embodiments. In particular, the method defined via user interface 740 is a method for updating, at the external HR server, an email address that corresponds to a particular user ID. As shown, the method defined via user interface 740 is named "update_user_email." Like the "get_user_by_id" method described with respect to Figure 7D, the "update_user_email" method is configured to be carried out with respect to the external table "ext_user" described above with respect to Figure 7C, and the data source associated with the method is "ExternalHR," which is the external HR server identified via user interface 710, as shown in Figure 7B. As described above, the external HR server supports REST services, and updating user profile data at the external HR server involves a PUT request, so user interface 740 specifies that the method has a service request type of "REST / Put." Further, user interface 740 specifies that the method involves sending the PUT request to the base URL of the external HR server, but with "/user/{user_id}" added to the URL path. Again, the brackets indicate that "user_id" is a variable and should be replaced with an input parameter, namely, the string-type input parameter "user_id" defined via user interface 740. User interface 740 further defines an additional string-type "email" input parameter, which is used to specify the updated email address to store at the external HR server.

Accordingly, the method defined by user interface 740 may involve the remote network management platform obtaining the "user_id" and "email" input parameters and sending a PUT request to the external HR server at the user profile URL corresponding to the input parameter, where the body of the PUT request includes the email address specified by the "email" input parameter. The external HR server may respond to the PUT request with a status code indicating whether the data update was successful.

In some embodiments, the remote network management platform may automatically define an external table schema and/or one or more external table methods. For example, if the external server is a type of external server that supports introspection, such as an SQL system, the remote network management platform may send an introspection query to the external server. The external server may respond to the query by identifying the schema (e.g., table names, table types, column names, column types) of the external server. The remote network management platform may use the identified schema of the external server to define an external table schema, for instance, by defining fields and data types that correspond to column names and column types of the identified schema. The remote network management server may then use the defined schema of the external table to automatically define methods for one or more CRUD operations on that table. For example, the remote network management system may automatically define methods similar to or the same as the methods described above with respect to Figures 7D and 7E.

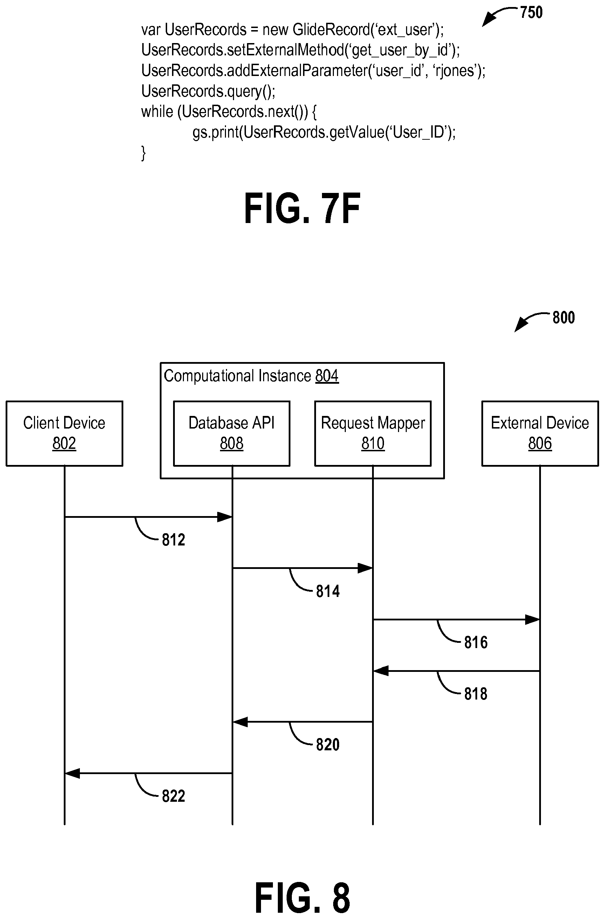

Figure 7F depicts code 750, scripted in accordance with the database API, for causing the remote network management platform to perform a method on an external table, according to an example embodiment. In particular, the code 750 causes the remote network management platform to perform the "get_user_by_id" method defined in Figure 7D. Similar to the code 620 depicted in Figure 6C, the code 750 defines a "UserRecords" variable as a GlideRecord object that references both the records and fields of a table. As shown, the GlideRecord of code 750 references the records and fields of the external table "ext_user" defined in Figure 7C. In order to perform operations on the GlideRecord, and consequently on the external table "ext_user," one or more methods are identified, as well as any parameters corresponding to the identified methods. As shown, the "get_user_by_id" method defined in Figure 7D is set as the method to be performed on the external table. As noted above, the "get_user_by_id" method uses a "user_id" input parameter, and so, in the present example, the code 750 specifies the "user_id" parameter as "rjones." The code 750 then calls for a query command, which executes the "get_user_by_id" method. In this manner, executing the code 750 causes the remote network management platform to send a GET request to the external HR server at https://externalhr.com/api/user/rjones, and the external HR server responds to the GET request with user profile information stored at that address.

The external server methods described above with respect to Figures 7D-7F are for illustrative purposes only, and it will be understood that the scope of possible methods is not limited to these particular methods. For example, methods may be defined for any number of data operations supported by the external HR server, including any of the CRUD operations described above with respect to Figure 7A.

In any case, once methods are defined for the remote network management platform to perform data operations on externally stored data, the methods may be mapped to, or otherwise associated with, various operations that are requested through the database API. As such, when a particular data operation involving externally stored data is requested through the database API, the particular data operation can be mapped to a corresponding method, and the remote network management platform may execute the corresponding method, thereby performing the particular data operation on the externally stored data. Examples are explained in further detail below with respect to Figure 8.

Figure 8 is a sequence diagram 800 depicting communications between a client device 802, a computational instance 804 of a remote network management platform, and an external server device 806, in accordance with example embodiments. The computational instance 804 includes a database API 808, such as the database API configured to organize and present data in tabular form as described above, as well as a request mapper 810.

In practice, the client device 802 sends a request 812 by way of the database API 808. The request 812 may be sent in a format of the database API, but the request 812 may be for the computational instance 804 to perform a particular operation on the external server device 806 rather than on data stored at the computational instance 804. The computational instance 804 may then determine that the request 812 is to perform the operation on external data at the external server device 806, rather than on data stored locally. And the computational instance 804 may further determine that the external server device 806 is accessible by way of a communication protocol that supports a set of protocol-specific operations. For instance, as described above, a user may have created an external table associated with the external server device 806, and the request 812 may be for the computational instance 804 to perform a particular operation involving the external table. Based on the operation involving the external table, the computational instance 804 may determine that the operation requires accessing the external server device 806, and, based on the configuration of the external table, the computational instance 804 may determine that the operation requires using a particular communication protocol of the external server device 806, such as REST. And as further described above, various methods involving the external server device's protocol-specific operations may be defined and stored at the computational instance 804.

Responsive to determining that the request 812 requires accessing the external server device 806 using the particular communication protocol, the computational instance 804 may translate the request 812 from a format of the database API into a format of the communication protocol. For instance, the database API 808 may send a message 814 including the request 812 or an indication of the request 812 to the request mapper 810. The request mapper 810 may then map the particular operation of the request 812 to a target operation of the set of protocol-specific operations. For instance, in line with the discussion above, the request mapper 810 may map the operation of the request 812 to a predefined method that uses the communication protocol of the external device 806.

The request 812 and its corresponding method may take various forms. In one example, the request 812 may include a request to create an external table, for instance using the user interfaces 710 and 720 depicted in Figures 7B and 7C. The request mapper 810 may associate external table creation requests with one or more methods for populating data fields of the external table. For instance, based on receiving a request to create the "ext_user" table as described above in connection with Figures 7B and 7C, the request mapper 810 may map the request to one or more GET methods, such as the "get_user_by_id" method described above in connection with Figure 7D, for retrieving user profile information from the external server device 806.

In another example, the request 812 may include a request to modify a field of an external table. For instance, the computational instance 804 may be configured to provide a visual representation of the external table to the client device 802, and the client device 802 may display the visual representation of the external table to a user. The user may request a data operation on certain data associated with the external table by modifying the displayed visual representation. For instance, the visual representation of the external table may be an image of a table having rows and columns, and the user may modify the visual representation of the external table by modifying one or more fields corresponding to a particular row and column of the displayed table. The request mapper 810 may associate the modification of a field of the external table with one or more methods for updating data stored at the external server device 806. For instance, based on a user modifying an email address in the "ext_user" table, the request mapper 810 may identify and carry out one or more PUT methods, such as the "update_user_email" method described above in connection with Figure 7E.

In still another example, the request 812 may indirectly affect the external table. For instance, as described above in connection with Figures 6A and 6B, the database API 804 may allow for database tables to reference one another. As such, in some embodiments, a database table may reference an external table and vice versa. Referring to Figure 6A, for instance, user data associated with Susan Smith and David Williams may be stored at the external server device 806, and the user table 600 may reference the external user table in order to populate certain fields of the user table 600, such as the "First_Name," "Last_Name," "User_ID," and "Email" fields. And when a user modifies one of these fields that reference the external table, for instance by updating Susan Smith's email address, the computational instance 804 may determine that such a modification is to be performed at the external server device 806. As such, the request mapper 810 may responsively map the modification to a method for updating Susan Smith's email address at the external server device 806, such as the "update_user_email" method described above in connection with Figure 7E. In line with the discussion above, the "update_user_email" method may involve "user_id" and "email" input parameters. The "email" parameter may be populated with the updated email address input by the user, and the "user_id" parameter may be populated by querying the external server, for example, by executing a method that returns a user ID. Other examples of requests 812 and corresponding methods are possible as well and are not limited to the examples described herein.

In any case, once the request mapper maps the operation of the request 812 to a predefined method that uses the communication protocol of the external device 806, the request mapper 810 may then transmit, using the communication protocol of the external server device 806 in accordance with the predefined method, a message 816 to the external server device 806. The message 816 instructs the external server device 806 to perform the target operation, and so the external server device 806 may perform or attempt to perform the target operation. The external server device 806 may then respond, using the communication protocol of the external device 806, with a message 818 that contains a result of the external server device 806 attempting to perform or performing the target operation. For instance, the message 818 may include a status code indicating whether the target operation was successfully performed, or if the message 816 from the request mapper 810 included a read request, then the message 818 may include data that was requested by the read request.

In some embodiments, the request mapper may perform various transformations on data that the request mapper transmits to the external server device 806, for instance on data included in the message 816. As an example, the message 816 may include the full name of a user, and the external device 806 may expect to receive user names separated by first name and last name. For instance, as described above in connection with Figure 7A, the external device 806 may store a user's first name and a user's last name as separate data entries. Accordingly, the remote network management platform may determine, based on the exposed services 700 of the external device 806, that the external device 806 expects to receive user names separated by first name and last name and responsively cause the request mapper to separate user name data into separate data entries representing the user's first name and the user's last name. The request mapper may separate the user names, for instance, by detecting a space character in the user name data and identifying any characters before the space as the user's first name and any characters after the space as the user's last name. Examples of other data transformations are contemplated as well.

In some embodiments, the external server device 806 may not be capable of completely performing the target operation. For instance, the request 812 may include a query for information that is not stored at the external server device 806. In a specific example, the request 812 may include a request for the office location where a user is employed. However, the external server device 806 might not include this information, or this information may be associated with a different table. In such an example, the request mapper 810 may map the request 812 to a broader request to obtain relevant data that the database API 804 can then further manipulate to fully perform the requested operation. For instance, responsive to receiving a request 812 for the office location of the user, the request mapper 810 may map the request 812 to a method for obtaining various other information associated with the user, for instance by mapping the request 812 to the "get_user_by_id" method described above in connection with Figure 7D. The external server device 806 may respond with the user profile data for the user, and the database API 804 may reference other tables using the user profile data to identify the user's office location. For instance, if the external server device 806 returns user profile data indicating that the user works in the sales department, then the database API 804 may reference the "Department_Table" 610 depicted in Figure 6B to determine that the sales department, and thus the user, is located in Chicago.

In any case, the computational instance, for instance using the request mapper 810, translates the result 818 from the format of the external server device's communication protocol into the format of the database API protocol and provides the translated result 820 to the database API 808. The computational instance then transmits, using the database API 808, the result as translated 822 to the client device. For instance, in examples where the request 812 is to create or update an external table, transmitting the translated result 822 to the client device may include displaying a visual representation of the created or updated table. Other examples are possible as well.

In this manner, an external table associated with the external server device 806 may appear to a user of the enterprise like any other database table that includes data stored on the remote network management platform. As such, the user can perform operations on the external table using operations that are specific to a protocol of the database API, but instead of operating on data stored on the remote network management platform, the operations are mapped to methods that comply with a protocol of the external server device 806.

In some embodiments, an enterprise may have data stored on multiple external server devices. For instance, an enterprise that acquires or absorbs two other enterprises-Company A and Company B may have user data for employees of Company A stored at a first external server, and user data for employees of Company B stored at a second external server. In line with the discussion above, the enterprise may define two separate sets of communication rules for two external tables having two separate schemas, as described above in connection with Figures 7B and 7C for instance. The client device 802 may request operations on data stored at the first external server by referencing a first external table in the request 812, or, alternatively, the client device 802 may request operations on data stored at the second external server by referencing a second external table in the request 812.

Alternatively, in some embodiments, the enterprise may define a shared external table schema for the data stored at the first external server and the second external server, and the remote network management platform may identify which external server the requested operations are associated with based on a domain associated with the request 812 from the client device 802. For instance, in the request 812, the client device 802 may request operations on data associated with a user ID of "user@CompanyA.com." Here, the user ID provided in the request 812 includes a domain of "CompanyA.com." Based on that domain, the computational instance 804 may determine that the requested operations are to be performed at the first external server associated with Company A. Corresponding examples apply to performing operations on data stored at the second external server associated with Company B, as well.

In some embodiments, the remote network management platform may provide graceful degradation by limiting the functionality provided by the database API to a user. In particular, if a particular database API request does not have a corresponding external method defined for it, then the remote network management platform may prevent a user from making the particular database API request. For example, if there is no method defined for creating a record in an external table, then the database API may be configured to not present, to the user, an option for creating a record. This functionality may be applied to other database API requests and their corresponding methods as well.

### VI. Example Operations

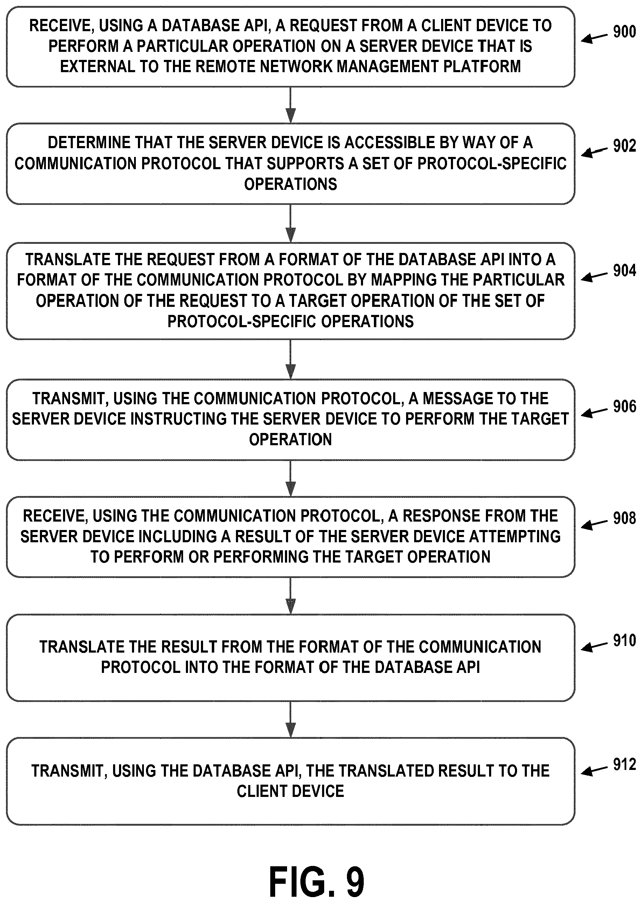

Figure 9 is a flow chart illustrating an example embodiment. The process illustrated by Figure 9 may be carried out by a computing device, such as computing device 100, and/or a cluster of computing devices, such as server cluster 200. However, the process can be carried out by other types of devices or device subsystems. For example, the process could be carried out by a portable computer, such as a laptop or a tablet device.

The embodiments of Figure 9 may be simplified by the removal of any one or more of the features shown therein. Further, these embodiments may be combined with features, aspects, and/or implementations of any of the previous figures or otherwise described herein.

The embodiments of Figure 9 may be carried out in connection with a computational instance of a remote network management platform. The computational instance may include (i) a database API configured to allow operations to be performed on data within one or more database devices of the computational instance and (ii) an application configured to execute on a computing system of the computational instance, where the application is further configured to carry out the operations described in connection with the embodiments of Figure 9.

Block 900 may involve the application of the computational instance receiving, using the database API, a request from a client device. The request may be to perform a particular operation on a server device that is external to the remote network management platform. Further, the request may be in a format that complies with a communication protocol of the database API.

Block 902 may involve the application determining that the server device is accessible by way of a communication protocol that supports a set of protocol-specific operations. The communication protocol of the server device may be different than the communication protocol of the database API, such that the server device may not be capable of processing the request from the client device. For instance, the communication protocol of the server device may support HTML, REST, SOAP, JDBC, JavaScript, or various other web services, and the communication protocol of the database API may be some other protocol that is proprietary or otherwise specific to the database API.

Block 904 may involve the application translating the request from a format of the database API into a format of the server device communication protocol, where the translation of the request involves mapping the particular operation of the request to a target operation of the set of protocol-specific operations.

Block 906 may involve the application transmitting, using the server device communication protocol, a message to the server device, where the message instructs the server device to perform the target operation.

Block 908 may involve the application receiving, using the server device communication protocol, a response from the server device, where the response contains a result of the server device attempting to perform or performing the target operation.

Block 910 may involve the application translating the result from the format of the server device communication protocol into the format of the database API.

Block 912 may involve the application transmitting, using the database API, the result as translated to the client device.

In some embodiments, the request from the client device is to perform a create operation on the server device. In these embodiments, translating the request may involve mapping the requested create operation to a target create operation of the set of protocol-specific operations, and performing the target create operation may cause the server device to generate a new data structure or a new entry within an existing data structure in accordance with the request.

In some embodiments, the request from the client device is to perform a read operation on the server device. In these embodiments, translating the request may involve mapping the requested read operation to a target read operation of the set of protocol-specific operations, and performing the target read operation may cause the server device to look up data in accordance with the request.

In some embodiments, the request from the client device is to perform an update operation on the server device. In these embodiments, translating the request may involve mapping the requested update operation to a target update operation of the set of protocol-specific operations, and performing the target update operation may cause the server device to write data in accordance with the request.

In some embodiments, the request from the client device is to perform a delete operation on the server device. In these embodiments, translating the request may involve mapping the requested delete operation to a target delete operation of the set of protocol-specific operations, and performing the target delete operation may cause the server device to delete data in accordance with the request.

In some embodiments, the result of the server device attempting to perform or performing the target operation is a result of the server device partially performing the target operation, and the application is further configured to use the database API to perform additional operations on the result, thereby fully performing the target operation.

In some embodiments, the database API is further configured to provide the data within the one or more database devices of the computational instance to the client device in tabular form. In these embodiments, receiving the request from the client device to perform the particular operation on the server device may involve receiving a request from the client device to modify a table provided by the database API to the client device.

In some embodiments, the database API includes operations related to virtual database tables, and the virtual database tables serve as proxies for accessing data by way of the external server.

In some embodiments, the computational instance contains mappings from operations defined by the database API to corresponding target operations of the set of protocol-specific operations.

### VII. Conclusion

The present disclosure is not to be limited in terms of the particular embodiments described in this application, which are intended as illustrations of various aspects. Many modifications and variations can be made without departing from its scope, as will be apparent to those skilled in the art. Functionally equivalent methods and apparatuses within the scope of the disclosure, in addition to those described herein, will be apparent to those skilled in the art from the foregoing descriptions. Such modifications and variations are intended to fall within the scope of the appended claims.

The above detailed description describes various features and operations of the disclosed systems, devices, and methods with reference to the accompanying figures. The example embodiments described herein and in the figures are not meant to be limiting. Other embodiments can be utilized, and other changes can be made, without departing from the scope of the subject matter presented herein. It will be readily understood that the aspects of the present disclosure, as generally described herein, and illustrated in the figures, can be arranged, substituted, combined, separated, and designed in a wide variety of different configurations.

With respect to any or all of the message flow diagrams, scenarios, and flow charts in the figures and as discussed herein, each step, block, and/or communication can represent a processing of information and/or a transmission of information in accordance with example embodiments. Alternative embodiments are included within the scope of these example embodiments. In these alternative embodiments, for example, operations described as steps, blocks, transmissions, communications, requests, responses, and/or messages can be executed out of order from that shown or discussed, including substantially concurrently or in reverse order, depending on the functionality involved. Further, more or fewer blocks and/or operations can be used with any of the message flow diagrams, scenarios, and flow charts discussed herein, and these message flow diagrams, scenarios, and flow charts can be combined with one another, in part or in whole.

A step or block that represents a processing of information can correspond to circuitry that can be configured to perform the specific logical functions of a herein-described method or technique. Alternatively or additionally, a step or block that represents a processing of information can correspond to a module, a segment, or a portion of program code (including related data). The program code can include one or more instructions executable by a processor for implementing specific logical operations or actions in the method or technique. The program code and/or related data can be stored on any type of computer readable medium such as a storage device including RAM, a disk drive, a solid state drive, or another storage medium.

The computer readable medium can also include non-transitory computer readable media such as computer readable media that store data for short periods of time like register memory and processor cache. The computer readable media can further include non-transitory computer readable media that store program code and/or data for longer periods of time. Thus, the computer readable media may include secondary or persistent long term storage, like ROM, optical or magnetic disks, solid state drives, compact-disc read only memory (CD-ROM), for example. The computer readable media can also be any other volatile or non-volatile storage systems. A computer readable medium can be considered a computer readable storage medium, for example, or a tangible storage device.

Moreover, a step or block that represents one or more information transmissions can correspond to information transmissions between software and/or hardware modules in the same physical device. However, other information transmissions can be between software modules and/or hardware modules in different physical devices.

The particular arrangements shown in the figures should not be viewed as limiting. It should be understood that other embodiments can include more or less of each element shown in a given figure. Further, some of the illustrated elements can be combined or omitted. Yet further, an example embodiment can include elements that are not illustrated in the figures.

### CLAUSES SETTING OUT FURTHER ASPECTS AND EMBODIMENTS

A1. A computational instance of a remote network management platform, the computational instance comprising: a database application programming interface (API) configured to allow operations to be performed on data within one or more database devices of the computational instance; an application configured to execute on a computing system of the computational instance, wherein the application is further configured to: receive, using the database API, a request from a client device, wherein the request is to perform a particular operation on a server device that is external to the remote network management platform; determine that the server device is accessible by way of a communication protocol that supports a set of protocol-specific operations; translate the request from a format of the database API into a format of the communication protocol, wherein the translation of the request involves mapping the particular operation of the request to a target operation of the set of protocol-specific operations; transmit, using the communication protocol, a message to the server device, wherein the message instructs the server device to perform the target operation; receive, using the communication protocol, a response from the server device, wherein the response contains a result of the server device attempting to perform or performing the target operation; translate the result from the format of the communication protocol into the format of the database API; and transmit, using the database API, the result as translated to the client device.
A2. The computational instance of clause A1, wherein the request from the client device is to perform a create operation on the server device, wherein translating the request comprises mapping the requested create operation to a target create operation of the set of protocol-specific operations, and wherein the target create operation causes the server device to generate a new data structure or a new entry within an existing data structure in accordance with the request.
A3. The computational instance of clause A1, wherein the request from the client device is to perform a read operation on the server device, wherein translating the request comprises mapping the requested read operation to a target read operation of the set of protocol-specific operations, and wherein the target read operation causes the server device to look up data in accordance with the request.
A4. The computational instance of clause A1, wherein the request from the client device is to perform an update operation on the server device, wherein translating the request comprises mapping the requested update operation to a target update operation of the set of protocol-specific operations, and wherein the target update operation causes the server device to write data in accordance with the request.
A5. The computational instance of clause A1, wherein the request from the client device is to perform a delete operation on the server device, wherein translating the request comprises mapping the requested delete operation to a target delete operation of the set of protocol-specific operations, and wherein the target delete operation causes the server device to delete data in accordance with the request.
A6. The computational instance of clause A1, wherein the result of the server device attempting to perform or performing the target operation is a result of the server device partially performing the target operation, and wherein the application is further configured to: use the database API to perform additional operations on the result, thereby fully performing the target operation.
A7. The computational instance of clause A1, wherein the computational instance is configured to use the database API to provide the data within the one or more database devices of the computational instance to the client device in tabular form, and wherein receiving the request from the client device to perform the particular operation on the server device comprises receiving a request from the client device to modify a table provided by the computational instance to the client device.
A8. The computational instance of clause A1, wherein the database API includes operations related to virtual database tables, and wherein the virtual database tables serve as proxies for accessing data by way of the external server.
A9. The computational instance of clause A1, wherein the computational instance contains mappings from operations defined by the database API to corresponding target operations of the set of protocol-specific operations.
A10. A method for use in connection with a computational instance of a remote network management platform, wherein the computational instance comprises a database application programming interface (API) configured to allow operations to be performed on data within one or more database devices of the computational instance, the method comprising: receiving, using the database API, a request from a client device, wherein the request is to perform a particular operation on a server device that is external to the remote network management platform; determining, by the computational instance, that the server device is accessible by way of a communication protocol that supports a set of protocol-specific operations; translating, by the computational instance, the request from a format of the database API into a format of the communication protocol, wherein the translation of the request involves mapping the particular operation of the request to a target operation of the set of protocol-specific operations; transmitting, by the computational instance and using the communication protocol, a message to the server device, wherein the message instructs the server device to perform the target operation; receiving, by the computational instance and using the communication protocol, a response from the server device, wherein the response contains a result of the server device attempting to perform or performing the target operation; translating, by the computational instance, the result from the format of the communication protocol into the format of the database API; and transmitting, using the database API, the result as translated to the client device.
A11. The method of clause A10, wherein the request from the client device is to perform a create operation on the server device, wherein translating the request comprises mapping the requested create operation to a target create operation of the set of protocol-specific operations, and wherein the target create operation causes the server device to generate a new data structure or a new entry within an existing data structure in accordance with the request.
A12. The method of clause A10, wherein the request from the client device is to perform a read operation on the server device, wherein translating the request comprises mapping the requested read operation to a target read operation of the set of protocol-specific operations, and wherein the target read operation causes the server device to look up data in accordance with the request.
A13. The method of clause A10, wherein the request from the client device is to perform an update operation on the server device, wherein translating the request comprises mapping the requested update operation to a target update operation of the set of protocol-specific operations, and wherein the target update operation causes the server device to write data in accordance with the request.
A14. The method of clause A10, wherein the request from the client device is to perform a delete operation on the server device, wherein translating the request comprises mapping the requested delete operation to a target delete operation of the set of protocol-specific operations, and wherein the target delete operation causes the server device to delete data in accordance with the request.
A15. The method of clause A10, wherein the result of the server device attempting to perform or performing the target operation is a result of the server device partially performing the target operation, and wherein the method further comprises: using the database API to perform additional operations on the result, thereby fully performing the target operation.
A16. The method of clause A10, wherein the computational instance is configured to use the database API to provide the data within the one or more database devices of the computational instance to the client device in tabular form, and wherein receiving the request from the client device to perform the particular operation on the server device comprises receiving a request from the client device to modify a table provided by the computational instance to the client device.
A17. An article of manufacture including a non-transitory computer-readable medium having stored thereon program instructions that, upon execution by a computing system, cause the computing system to perform operations, wherein the computing system is disposed within a computational instance of a remote network management platform that remotely manages a managed network, wherein the computational instance comprises a database application programming interface (API) configured to allow operations to be performed on data within one or more database devices of the computational instance, and wherein the operations comprise: receiving, using the database API, a request from a client device, wherein the request is to perform a particular operation on a server device that is external to the remote network management platform; determining, by the computational instance, that the server device is accessible by way of a communication protocol that supports a set of protocol-specific operations; translating, by the computational instance, the request from a format of the database API into a format of the communication protocol, wherein the translation of the request involves mapping the particular operation of the request to a target operation of the set of protocol-specific operations; transmitting, by the computational instance and using the communication protocol, a message to the server device, wherein the message instructs the server device to perform the target operation; receiving, by the computational instance and using the communication protocol, a response from the server device, wherein the response contains a result of the server device attempting to perform or performing the target operation; translating, by the computational instance, the result from the format of the communication protocol into the format of the database API; and transmitting, using the database API, the result as translated to the client device.
A18. The article of manufacture of clause A17, wherein the request from the client device is to perform a create, read, update, or delete operation on the server device, wherein translating the request comprises mapping the requested create, read, update, or delete operation to a target create, read, update, or delete operation of the set of protocol-specific operations, and wherein the target create, read, update, or delete operation causes the server device to (i) generate a new data structure or a new entry within an existing data structure in accordance with the request, (ii) look up data in accordance with the request, (iii) write data in accordance with the request, or (iv) delete data in accordance with the request.
A19. The article of manufacture of clause A17, wherein the result of the server device attempting to perform or performing the target operation is a result of the server device partially performing the target operation, and wherein the operations further comprise: using the database API to perform additional operations on the result, thereby fully performing the target operation.
A20. The article of manufacture of clause A17, wherein the computational instance is configured to use the database API to provide the data within the one or more database devices of the computational instance to the client device in tabular form, and wherein receiving the request from the client device to perform the particular operation on the server device comprises receiving a request from the client device to modify a table provided by the computational instance to the client device.

While various aspects and embodiments have been disclosed herein, other aspects and embodiments will be apparent to those skilled in the art. The various aspects and embodiments disclosed herein are for purpose of illustration and are not intended to be limiting, with the true scope being indicated by the following claims.

## Claims

1. A computational instance of a remote network management platform, the computational instance comprising:
a database application programming interface (API) configured to allow operations to be performed on data within one or more database devices of the computational instance;
an application configured to execute on a computing system of the computational instance, wherein the application is further configured to:
receive, using the database API, a request from a client device, wherein the request is to perform a particular operation on a server device that is external to the remote network management platform;
determine that the server device is accessible by way of a communication protocol that supports a set of protocol-specific operations;
translate the request from a format of the database API into a format of the communication protocol, wherein the translation of the request involves mapping the particular operation of the request to a target operation of the set of protocol-specific operations;
transmit, using the communication protocol, a message to the server device, wherein the message instructs the server device to perform the target operation;
receive, using the communication protocol, a response from the server device, wherein the response contains a result of the server device attempting to perform or performing the target operation;
translate the result from the format of the communication protocol into the format of the database API; and
transmit, using the database API, the result as translated to the client device.

2. The computational instance of claim 1, wherein the request from the client device is to perform a create operation on the server device, wherein translating the request comprises mapping the requested create operation to a target create operation of the set of protocol-specific operations, and wherein the target create operation causes the server device to generate a new data structure or a new entry within an existing data structure in accordance with the request.

3. The computational instance of claim 1, wherein the request from the client device is to perform a read operation on the server device, wherein translating the request comprises mapping the requested read operation to a target read operation of the set of protocol-specific operations, and wherein the target read operation causes the server device to look up data in accordance with the request.

4. The computational instance of claim 1, wherein the request from the client device is to perform an update operation on the server device, wherein translating the request comprises mapping the requested update operation to a target update operation of the set of protocol-specific operations, and wherein the target update operation causes the server device to write data in accordance with the request.

5. The computational instance of claim 1, wherein the request from the client device is to perform a delete operation on the server device, wherein translating the request comprises mapping the requested delete operation to a target delete operation of the set of protocol-specific operations, and wherein the target delete operation causes the server device to delete data in accordance with the request.

6. The computational instance of claim 1, wherein the computational instance is configured to use the database API to provide the data within the one or more database devices of the computational instance to the client device in tabular form, and wherein receiving the request from the client device to perform the particular operation on the server device comprises receiving a request from the client device to modify a table provided by the computational instance to the client device.

7. The computational instance of claim 1, wherein the database API includes operations related to virtual database tables, and wherein the virtual database tables serve as proxies for accessing data by way of the external server.

8. A method for use in connection with a computational instance of a remote network management platform, wherein the computational instance comprises a database application programming interface (API) configured to allow operations to be performed on data within one or more database devices of the computational instance, the method comprising:
receiving, using the database API, a request from a client device, wherein the request is to perform a particular operation on a server device that is external to the remote network management platform;
determining, by the computational instance, that the server device is accessible by way of a communication protocol that supports a set of protocol-specific operations;
translating, by the computational instance, the request from a format of the database API into a format of the communication protocol, wherein the translation of the request involves mapping the particular operation of the request to a target operation of the set of protocol-specific operations;
transmitting, by the computational instance and using the communication protocol, a message to the server device, wherein the message instructs the server device to perform the target operation;
receiving, by the computational instance and using the communication protocol, a response from the server device, wherein the response contains a result of the server device attempting to perform or performing the target operation;
translating, by the computational instance, the result from the format of the communication protocol into the format of the database API; and
transmitting, using the database API, the result as translated to the client device.

9. The method of claim 8, wherein the request from the client device is to perform a create operation on the server device, wherein translating the request comprises mapping the requested create operation to a target create operation of the set of protocol-specific operations, and wherein the target create operation causes the server device to generate a new data structure or a new entry within an existing data structure in accordance with the request.

10. The method of claim 8, wherein the request from the client device is to perform a read operation on the server device, wherein translating the request comprises mapping the requested read operation to a target read operation of the set of protocol-specific operations, and wherein the target read operation causes the server device to look up data in accordance with the request.

11. The method of claim 8, wherein the request from the client device is to perform an update operation on the server device, wherein translating the request comprises mapping the requested update operation to a target update operation of the set of protocol-specific operations, and wherein the target update operation causes the server device to write data in accordance with the request.

12. The method of claim 8, wherein the request from the client device is to perform a delete operation on the server device, wherein translating the request comprises mapping the requested delete operation to a target delete operation of the set of protocol-specific operations, and wherein the target delete operation causes the server device to delete data in accordance with the request.

13. The method of claim 8, wherein the result of the server device attempting to perform or performing the target operation is a result of the server device partially performing the target operation, and wherein the method further comprises:
using the database API to perform additional operations on the result, thereby fully performing the target operation.

14. The method of claim 8, wherein the computational instance is configured to use the database API to provide the data within the one or more database devices of the computational instance to the client device in tabular form, and wherein receiving the request from the client device to perform the particular operation on the server device comprises receiving a request from the client device to modify a table provided by the computational instance to the client device.

15. An article of manufacture including a non-transitory computer-readable medium having stored thereon program instructions that, upon execution by a computing system, cause the computing system to perform operations, wherein the computing system is disposed within a computational instance of a remote network management platform that remotely manages a managed network, wherein the computational instance comprises a database application programming interface (API) configured to allow operations to be performed on data within one or more database devices of the computational instance, and wherein the operations comprise:
receiving, using the database API, a request from a client device, wherein the request is to perform a particular operation on a server device that is external to the remote network management platform;
determining, by the computational instance, that the server device is accessible by way of a communication protocol that supports a set of protocol-specific operations;
translating, by the computational instance, the request from a format of the database API into a format of the communication protocol, wherein the translation of the request involves mapping the particular operation of the request to a target operation of the set of protocol-specific operations;
transmitting, by the computational instance and using the communication protocol, a message to the server device, wherein the message instructs the server device to perform the target operation;
receiving, by the computational instance and using the communication protocol, a response from the server device, wherein the response contains a result of the server device attempting to perform or performing the target operation;
translating, by the computational instance, the result from the format of the communication protocol into the format of the database API; and
transmitting, using the database API, the result as translated to the client device.
